(19) Europäisches Patentamt
European Patent Office
Office européen des brevets

(11) EP 2 530 101 A1

(12) **EUROPÄISCHE PATENTANMELDUNG**

(43) Veröffentlichungstag:
**05.12.2012 Patentblatt 2012/49**

(51) Int Cl.:
***C08G 64/34*** *(2006.01)* ***C08G 18/44*** *(2006.01)*
***C08G 65/26*** *(2006.01)* ***C08G 64/18*** *(2006.01)*

(21) Anmeldenummer: **11168433.8**

(22) Anmeldetag: **01.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder:
- **Hofmann, Jörg**
  **41539 Dormagen (DE)**
- **Klesczewski, Bert**
  **51368 Leverkusen (DE)**
- **Schneider, Michael**
  **40789 Monheim (DE)**

(54) **Verfahren zur Herstellung von Polyetherpolyolen**

(57) Die vorliegende Erfindung betrifft ein Verfahren zur Herstellung von Polyethercarbonatpolyolen, wobei
(i) in einem ersten Schritt aus einer oder mehreren H-funktionellen Startsubstanzen, aus einem oder mehreren Alkylenoxiden und Kohlendioxid in Gegenwart mindestens eines DMC-Katalysators ein Polyethercarbonatpolyol hergestellt wird, und
(ii) in einem zweiten Schritt das Polyethercarbonatpolyol mit einer Mischung aus mindestens zwei verschiedenen Alkylenoxiden in Gegenwart mindestens eines DMC-Katalysators kettenverlängert wird.

Gegenstände der Erfindung sind auch Polyethercarbonatpolyole, die einen endständigen Mischblock aus mindestens zwei Alkylenoxiden enthalten, sowie ein Verfahren zur Herstellung von Polyurethanweichschaumstoffen, wobei eine Polyolkomponente eingesetzt wird, die ein erfindungsgemäßes Polyethercarbonatpolyol enthält.

EP 2 530 101 A1

## Beschreibung

Die vorliegende Erfindung betrifft ein Verfahren zur Herstellung von Polyethercarbonatpolyolen aus einer oder mehrerer H-funktionellen Startsubstanzen, einem oder mehreren Alkylenoxiden und Kohlendioxid in Gegenwart mindestens eines Doppelmetallcyanid-Katalysators, wobei die Polyethercarbonatpolyole am Kettenende einen Mischblock aus mindestens zwei Alkylenoxiden aufweisen, sowie daraus erhältliche Polyurethanweichschaumstoffe.

Die Herstellung von Polyethercarbonatpolyolen durch katalytische Umsetzung von Alkylenoxiden (Epoxiden) und Kohlendioxid in An- oder Abwesenheit von H-funktionellen Startersubstanzen (Startern) wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Starterverbindung ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

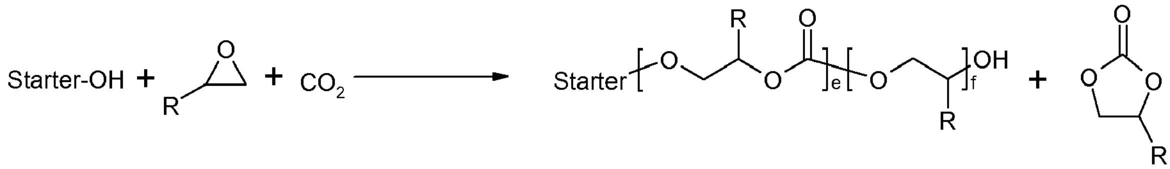

(I)

Als Aktivierung im Sinne der Erfindung wird ein Schritt bezeichnet, bei dem eine Teilmenge Alkylenoxidverbindung, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten der Wärmeentwicklung. Im Allgemeinen kann dem Aktivierungsschritt ein Schritt zum Trocknen des DMC-Katalysators und ggf. des Starters bei erhöhter Temperatur und/oder reduziertem Druck vorgelagert sein, wobei dieser Schritt der Trocknung nicht Teil des Aktivierungsschrittes im Sinne der vorliegenden Erfindung ist.

Die Bildung von Copolymeren aus Epoxiden (z.B. Propylenoxid) und Kohlendioxid ist seit langem bekannt. So beschreibt zum Beispiel US 4500704 die Copolymerisation von Kohlendioxid und Propylenoxid unter Verwendung von DMC-Katalysatoren. Hier wurden beispielsweise in einem Reaktor ausgehend von einer Startersubstanz und 12,3 g Propylenoxid (212 mmol) und einem Druck an Kohlendioxid von 48 bar nach 48 Stunden bei 35 °C 71% des Propylenoxids umgesetzt. Von den umgesetzten 150,5 mmol Propylenoxid reagierten 27 mmol (18 %) zum im Allgemeinen unerwünschten Nebenprodukt Propylencarbonat.

WO-A 2008/058913 offenbart ein Verfahren zur Herstellung von Polyethercarbonatpolyolen, die am Kettenende einen Block aus reinen Alkylenoxideinheiten, insbesondere einen Block aus reinen Propylenoxideinheiten haben. WO-A 2008/058913 offenbart aber keine Polyethercarbonatpolyole, die am Kettenende einen Mischblock aus mindestens zwei Alkylenoxiden aufweisen.

Aufgabe der vorliegenden Erfindung war es, Polyethercarbonatpolyole bereitzustellen, die zu Polyurethan-Weichschaumstoffen führen, die eine erhöhte Stauchhärte und eine erhöhte Zugfestigkeit aufweisen. Eine derartig verbesserte Polyurethan-Weichschaumstoffqualität hat in der Praxis den technischen Vorteil, dass diese eine erhöhte mechanische Belastbarkeit aufweisen.

Überraschenderweise wurde nun gefunden, dass aus Polyethercarbonatpolyolen, die am Kettenende einen Mischblock ("terminaler Mischblock") aus mindestens zwei Alkylenoxiden aufweisen, Polyurethan-Weichschaumstoffe resultieren, die eine erhöhte Stauchhärte und eine erhöhte Zugfestigkeit aufweisen. Gegenstand der vorliegenden Erfindung ist somit ein Verfahren zur Herstellung von Polyethercarbonatpolyolen, dadurch gekennzeichnet, dass

(i) in einem ersten Schritt aus einer oder mehreren H-funktionellen Startsubstanzen, aus einem oder mehreren Alkylenoxiden und Kohlendioxid in Gegenwart mindestens eines DMC-Katalysators ein Polyethercarbonatpolyol hergestellt wird, und

(ii) in einem zweiten Schritt das Polyethercarbonatpolyol mit einer Mischung aus mindestens zwei verschiedenen Alkylenoxiden in Gegenwart mindestens eines DMC-Katalysators kettenverlängert wird.

Weiterer Gegenstand der vorliegenden Erfindung ist ein Verfahren zur Herstellung von Polyurethanweichschaumstoffen, wobei als Ausgangsstoff eine Polyolkomponente (Komponente A) eingesetzt wird, die ein Polyethercarbonatpolyol enthält, welches erhältlich ist durch ein Verfahren, dadurch gekennzeichnet, dass

(i) in einem ersten Schritt aus einer oder mehreren H-funktionellen Startsubstanzen, aus einem oder mehreren Alkylenoxiden und Kohlendioxid in Gegenwart mindestens eines DMC-Katalysators ein Polyethercarbonatpolyol hergestellt wird, und
(ii) in einem zweiten Schritt das Polyethercarbonatpolyol mit einer Mischung aus mindestens zwei verschiedenen Alkylenoxiden in Gegenwart mindestens eines DMC-Katalysators kettenverlängert wird.

Die erfindungsgemäßen Polyurethanweichschaumstoffe weisen vorzugsweise eine Rohdichte gemäß DIN EN ISO 3386-1-98 im Bereich von ≥ 10 kg/$m^3$ bis ≤ 150 kg/m3, vorzugsweise von ≥ 20 kg/$m^3$ bis ≤ 70 kg/$m^3$ auf und vorzugsweise liegt deren Stauchhärte gemäß DIN EN ISO 3386-1-98 im Bereich von ≥ 0,5 kPa bis ≤ 20 kPa (bei 40% Verformung und 4. Zyklus).

Schritt (i):

Die Herstellung des Polyethercarbonatpolyols gemäß Schritt (i) erfolgt vorzugsweise durch Anlagerung ein oder mehrerer Alkylenoxide und Kohlendioxid in Gegenwart mindestens eines DMC-Katalysators an eine oder mehrere H-funktionellen Startsubstanzen ("Copolymerisation").

Beispielsweise ist das Verfahren zur Herstellung von Polyethercarbonatpolyol gemäß Schritt (i) dadurch gekennzeichnet, dass

(α) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,
(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) ein oder mehrere Alkylenoxide und Kohlendioxid zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden.

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden in Schritt (i) als Alkylenoxide Ethylenoxid und/oder Propylenoxid, insbesondere Propylenoxid eingesetzt.

Als geeignete **H-funktionelle Startsubstanz** können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt.. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionelle Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit

Mn = 150 bis 2000 g/mol zur Herstellung der Polyesteretherpolyole eingesetzt.

Des weiteren können als H-funktionelle Startersubstanzen Polycarbonatpolyole (wie beispielsweise Polycarbonatdiole) eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren nach Schritt (i) oder nach Schritt (ii) oder nach Schritt (iii) erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO\text{-}(CH_2)_x\text{-}OH \qquad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-caprolacton, Umsetzungsprodukte von Glycerin mit ε-caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionellen Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden erhalten, indem man

(a) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,

(b) wobei im zweiten Schritt der Feststoff aus der aus (i) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$ $Sr^{2+}$, $Sn^{2+}$, $Pb^{2}$+ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M_r(X)_3 \qquad (IV)$$

wobei

M ausgewählt ist aus den Metallkationen $Fe^{3+}$, $Al^{3+}$, $Co^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M(X)_t \qquad (VI)$$

wobei

M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der

Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VII)

$$(Y)_a\ M'(CN)_b\ (A)_c \qquad \text{(VII)}$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat (III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den DMC-Katalysatoren enthalten sind, sind Verbindungen der allgemeinen Formel (VIII)

$$M_x[M'_{x'},(CN)_y]_z \qquad \text{(VIII),}$$

worin M wie in Formel (III) bis (VI) und

M' wie in Formel (VII) definiert ist, und
x, x', y und z sind ganzzahlig und so gewählt, dass die Elektronenneutralität der Doppelmetallcyanidverbindung gegeben ist.

Vorzugsweise ist

x=3,x'=1, y=6 und z = 2,
M = Zn(II) , Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren

Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetanmethanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetanmethanol.

Optional werden bei der Herstellung der DMC-Katalysatoren eine oder mehrere komplexbildende Komponente (n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, a,β-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00.) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 bis 100°C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Schritt (ii):

In Schritt (ii) wird in einer bevorzugten Ausführungsform der Erfindung als Mischung aus mindestens zwei verschiedenen Alkylenoxiden eine Mischung aus Ethylenoxid (EO) und Propylenoxid (PO) eingesetzt. Vorzugsweise beträgt das in Schritt (ii) eingesetzte molare Verhältnis EO/PO von 95/5 bis 10/90, besonders bevorzugt von 90/10 bis 20/80, höchst bevorzugt von 85/15 bis 60/40. Bevorzugt weisen die nach Schritt (ii) resultierenden Polyethercarbonatpolyole, die einen endständigen Mischblock aus EO und PO enthalten, einen Anteil an primären OH-Gruppen von 10 bis 90 mol%, besonders bevorzugt von 20 bis 50 mol% auf.

Die mittlere Länge der gemäß Schritt (ii) hergestellten Mischblöcke aus mindestens zwei verschiedenen Alkylenoxiden beträgt bevorzugt 2,0 bis 20,0 Alkylenoxid-Einheiten, besonders bevorzugt 2,5 bis 10,0 Alkylenoxid-Einheiten, jeweils bezogen auf eine OH-Gruppe des Polyethercarbonatpolyols.

Bevorzugt weisen die nach Schritt (ii) resultierenden Polyethercarbonatpolyole, die einen Mischblock aus mindestens zwei Alkylenoxiden enthalten, eine Hydroxylzahl von 20 mg KOH/g bis 80 mg KOH/g, besonders bevorzugt von 25 mg KOH/g bis 60 mg KOH/g auf.

Schritt (iii):

Gegebenenfalls kann das erfindungsgemäße Verfahren zur Herstellung von Polyethercarbonatpolyolen noch einen dritten Schritt umfassen, wobei

(iii) das aus Schritt (ii) resultierende Polyethercarbonatpolyol mit terminalen Mischblock kettenverlängert wird mit einem Alkylenoxid, vorzugsweise mit Propylenoxid oder Ethylenoxid, besonders bevorzugt mit Propylenoxid.

Die mittlere Länge eines gemäß Schritt (iii) hergestellten reinen Alkylenoxidblocks beträgt bevorzugt 2 bis 30 Alkylenoxid-Einheiten, besonders bevorzugt 5 bis 18 Alkylenoxid-Einheiten, jeweils bezogen auf eine OH-Gruppe des Polyethercarbonatpolyols. Die Umsetzung gemäß Schritt (iii) kann beispielsweise in Gegenwart von DMC-Katalysatoren erfolgen, oder aber in Gegenwart von sauren Katalysatoren (wie beispielsweise $BF_3$) oder basischen Katalysatoren (wie beispielsweise KOH oder CsOH). Vorzugsweise erfolgt die Umsetzung gemäß Schritt (iii) in Gegenwart eines DMC-Katalysators.

Polyethercarbonatpolyole

Gegenstand der Erfindung sind somit auch Polyethercarbonatpolyole, die einen endständigen Mischblock aus mindestens zwei Alkylenoxiden, vorzugsweise einen endständigen Mischblock aus Ethylenoxid (EO) und Propylenoxid (PO) enthalten. Vorzugsweise beträgt das molare Verhältnis von EO/PO von 95/5 bis 10/90, besonders bevorzugt von 90/10 bis 20/80, höchst bevorzugt von 85/15 bis 60/40. In einer bevorzugten Ausführungsform der Erfindung weisen die Polyethercarbonatpolyole, die einen endständigen Mischblock aus EO und PO enthalten, einen Anteil an primären OH-Gruppen von 10 bis 90 mol%, besonders bevorzugt von 20 bis 50 mol% auf. Bevorzugter Gegenstand der Erfindung sind Polyethercarbonatpolyole, die einen endständigen Mischblock aus mindestens zwei Alkylenoxiden aufweisen, dadurch gekennzeichnet , dass die mittlere Länge des endständigen Mischblocks aus mindestens zwei verschiedenen Alkylenoxiden von 2,0 bis 20,0 Allcylenoxid-Einheiten, besonders bevorzugt 2,5 bis 10,0 Allcylenoxid-Einheiten (jeweils bezogen auf eine OH-Gruppe des Polyethercarbonatpolyols) beträgt. Die erfindungsgemäßen Polyethercarbonatpolyole, die einen Mischblock aus mindestens zwei Alkylenoxiden enthalten, weisen vorzugsweise eine Hydroxylzahl von 20 mg KOH/g bis 80 mg KOH/g, besonders bevorzugt von 25 mg KOH/g bis 60 mg KOH/g auf.

Optional können diese erfindungsgemäßen Polyethercarbonatpolyole am Kettenende einem reinen Alkylenoxid-Block enthalten, der vorzugsweise aus Propylenoxid- oder Ethylenoxid-Einheiten besteht, besonders bevorzugt aus Propylenoxid-Einheiten. Die mittlere Länge eines solchen reinen Alkylenoxidblocks am Kettenende beträgt bevorzugt 2 bis 30 Allcylenoxid-Einheiten, besonders bevorzugt 5 bis 18 Alkylenoxid-Einheiten, jeweils bezogen auf eine OH-Gruppe des Polyethercarbonatpolyols.

Polyurethanweichschaumstoffe

Bevorzugter Gegenstand der Erfindung ist ein Verfahren zur Herstellung von Polyurethanweichschaumstoffen mit einer Rohdichte gemäß DIN EN ISO 3386-1-98 im Bereich von $\geq$ 10 kg/$m^3$ bis $\leq$ 150 kg/$m^3$, vorzugsweise von $\geq$ 20 kg/$m^3$ bis $\leq$ 70 kg/$m^3$ und einer Stauchhärte gemäß DIN EN ISO 3386-1-98 im Bereich von $\geq$ 0,5 kPa bis $\leq$ 20 kPa (bei 40% Verformung und 4. Zyklus) durch Umsetzung von
Komponente A (Polyolformulierung) enthaltend

A1 100 bis 10 Gew.-Teile, bevorzugt 100 bis 50 Gew.-Teile, besonders bevorzugt 100 Gew.-Teile (bezogen auf die Summe der Gew.-Teile der Komponenten A1 und A2) Polyethercarbonatpolyol, das am Kettenende einen Mischblock aus mindestens zwei Alkylenoxiden aufweist,

A2 0 bis 90 Gew.-Teile, bevorzugt 0 bis 50 Gew.-Teile (bezogen auf die Summe der Gew.-Teile der Komponenten A1 und A2) konventionelles Polyetherpolyol, besonders bevorzugt ist die Komponente A frei von konventionellem Polyetherpolyol,

A3 0,5 bis 25 Gew.-Teile, bevorzugt 2 bis 5 Gew.-Teile (bezogen auf die Summe der Gew.-Teile der Komponenten A1 und A2) Wasser und/oder physikalische Treibmittel,

A4 0,05 bis 10 Gew.-Teile, bevorzugt 0,2 bis 4 Gew.-Teile (bezogen auf die Summe der Gew.-Teile der Komponenten A1 und A2) Hilfs- und Zusatzstoffe wie

a) Katalysatoren,
b) oberflächenaktive Zusatzstoffe,
c) Pigmente oder Flammschutzmittel,

A5 0 bis 10 Gew.-Teile, bevorzugt 0 bis 5 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399,

mit Komponente B enthaltend Polyisocyanate,
wobei die Herstellung bei einer Kennzahl von 50 bis 250, bevorzugt 70 bis 130, besonders bevorzugt 75 bis 115 erfolgt, und wobei alle Gewichtsteilangaben der Komponenten A1 bis A5 in der vorliegenden Anmeldung so normiert sind, dass die Summe der Gewichtsteile der Komponenten A1+A2 in der Zusammensetzung 100 ergibt.

Vorzugsweise ist das Polyethercarbonatpolyol gemäß Komponente A1 erhältlich durch das oben beschriebene erfindungsgemäße Herstellverfahren.

Komponente A1

Die Herstellung der Komponente A1 gemäß den Schritten (i) und (ii) sowie gemäß dem optionalen Schritt (iii) wurde bereits obenstehend im Zusammenhang mit dem Herstellverfahren der Polyethercarbonatpolyole erläutert.

Komponente A2

Ausgangskomponenten gemäß Komponente A2 sind konventionelle Polyetherpolyole. Unter konventionellen Polyetherpolyolen im Sinne der Erfindung werden Verbindungen bezeichnet, die Alkylenoxidadditionsprodukte von Starterverbindungen mit zerewitinoff-aktiven Wasserstoffatomen, also Polyetherpolyole mit einer Hydroxylzahl gemäß DIN 53240 von ≥ 15 mg KOH/g bis ≤ 80 mg KOH/g, vorzugsweise von ≥ 20 mg KOH/g bis ≤ 60 mg KOH/g sind.

Für die konventionellen Polyetherpolyole eingesetzte Starterverbindungen mit zerewitinoff-aktiven Wasserstoffatomen weisen meist Funktionalitäten von 2 bis 6 auf, vorzugsweise von 3, und vorzugsweise sind die Starterverbindungen hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff,. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder
β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N, N, N-Trimethyl-N-hydroxyethyl-bisaminoethylether und 3-Dimethylaminopropylamin.

Komponente A5

Gegebenenfalls werden als Komponente A5 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A5 Ethanolamin, Diethanolamin, Triethanolamin, Sorbit und/oder Glycerin eingesetzt werden. Weitere Beispiele für Verbindungen gemäß Komponente A5 werden in EP-A 0 007 502, Seiten 16 - 17, beschrieben.

Komponente B

Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (IX)

$$Q(NCO)_n \, , \qquad (IX)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 -15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'- Diphenylmethandiisocyanat, 2,4'-Diphenylmethandiisocyanat und Polyphenylpolymethylenpolyisocyanat eingesetzt.

Zur Herstellung der Polyurethanweichschaumstoffe werde die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanweichschaumstoffe können als Form- oder auch als Blockschaumstoffe hergestellt werden. Gegenstand der Erfindung sind daher ein Verfahren zur Herstellung der Polyurethanweichschaumstoffe, die nach diesen Verfahren hergestellten Polyurethanweichschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst. Die nach der Erfindung erhältlichen Polyurethanweichschaumstoffe finden beispielsweise folgende Anwendung: Möbelpolsterungen, Textileinlagen, Matratzen, Automobilsitze, Kopfstützen, Armlehne, Schwämme und Bauelementen.

Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an IsocyanatGruppen (NCO)-Menge an.

$$\text{Kennzahl} = [(\text{Isocyanat-Menge eingesetzt}) : (\text{Isocyanat-Menge berechnet})] \bullet 100 \quad (X)$$

<u>Beispiele</u>

Die vorliegende Erfindung wird anhand der nachfolgenden Beispiele weiter erläutert. Hierbei haben die verwendeten Materialien und Abkürzungen die folgende Bedeutung und Bezugsquellen:

- A2-1: trifunktionelles Polyetherpolyol mit einer OH-Zahl von 48 mg KOH/g, hergestellt durch DMC-katalysierte Alkoxylierung von Glycerin mit einem Gemisch von Propylenoxid und Ethylenoxid im Mengenverhältnis 89/11 und ca. 8 mol % primären OH-Gruppen.
- A4-1 Tegostab® B 2370, Zubereitung organo-modifizierter Polysiloxane, Firma Evonik Goldschmidt
- A4-2 Addocat® 108, Aminkatalysator der Firma Rheinchemie
- A4-3 Addocat® SO, Zinnkatalysator der Firma Rheinchemie
- TDI-1: Mischung enthaltend 80 Gew.-% 2,4-Toluylendiisocyanat und 20 Gew.-% 2,6-Toluylendiisocyanat mit einem NCO-Gehalt von 48,3 Gewichts-%.
- TDI-2 Mischung enthaltend 65 Gew.-% 2,4-Toluylendiisocyanat und 35 Gew.-% 2,6-Toluylendiisocyanat mit einem NCO-Gehalt von 48,3 Gewichts-%.

Die Analysen wurden wie folgt durchgeführt:

Dynamische Viskosität: Rheometer MCR 51 der Firma Anton Paar entsprechend DIN 53019.
Hydroxylzahl: anhand der Norm DIN 53240

Die Rohdichte wurde gemäß DIN EN ISO 3386-1-98 bestimmt.

Die Stauchhärte wurde gemäß DIN EN ISO 3386-1-98 (bei 40% Verformung und 4. Zyklus) bestimmt.
Die Zugfestigkeit und Bruchdehnung wurden bestimmt gemäß DIN EN ISO 1798.

Der Anteil an eingebautem $CO_2$, im resultierenden Polyethercarbonatpolyol wurde mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) mit Resonanz bei 4,5 ppm, Carbonat, resultierend aus im Polyethercarbonatpolyol eingebautem Kohlendioxid mit Resonanzen bei 5,1 bis 4,8 ppm, nicht abreagiertes PO mit Resonanz bei 2,4 ppm, Polyetherpolyol (d.h. ohne eingebautes Kohlendioxid) mit Resonanzen bei 1,2 bis 1,0 ppm, das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (XI) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (XI) für das polymer gebundene Carbonat ("lineares Carbonat" LC) in der Reaktionsmischung in mol% umgerechnet:

$$\mathrm{L}C = \frac{F(5{,}1-4{,}8)-F(4{,}5)}{\mathrm{F}(5{,}1\text{-}4{,}8)+\mathrm{F}(2{,}4)+0{,}33*\mathrm{F}(1{,}2\text{-}1{,}0)+0{,}25*\mathrm{F}(1{,}6\text{-}1{,}52)} * 100 \qquad \text{(XI)}$$

Der Gewichtsanteil (in Gew.-%) polymer-gebundenen Carbonats (LC') in der Reaktionsmischung wurde nach Formel (XII) berechnet,

$$LC' = \frac{[F(5{,}1-4{,}8)-F(4{,}5)]*102}{N} * 100\% \qquad \text{(XII)}$$

wobei sich der Wert für N ("Nenner" N) nach Formel (XIII) berechnet:

$$\mathrm{N} = [\mathrm{F}(5{,}1-4{,}8)-\mathrm{F}(4{,}5)]*102+\mathrm{F}(4{,}5)*102+\mathrm{F}(2{,}4)*58+0{,}33*\mathrm{F}(1{,}2-1{,}0)*58+0{,}25*\mathrm{F}(1{,}6-1{,}52)*146 \qquad \text{(XIII)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (XIV) berechnet,

$$CC' = \frac{F(4{,}5)*102}{N} * 100\% \qquad \text{(XIV)}$$

wobei sich der Wert für N nach Formel (XIII) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien

Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalt im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Bestimmung des molaren Anteils der primären OH-Gruppen: mittels $^1$H-NMR (Bruker DPX 400, Deuterochloroform):

Zur Bestimmung des Gehaltes an primären OH-Gruppen wurden die Polyethercarbonat-Proben zunächst peracetyliert.
Dabei wurde folgendes Peracetylierungsgemisch angesetzt:

9,4 g Essigsäureanhydrid p.A.
1,6 g Essigsäure p.A.
100 ml Pyridin p.A.

Für die Peracetylierungsreaktion wurden 10 g Polyethercarbonatpolyol in einen 300 ml-Schlifferlenmeyerkolben eingewogen. Das Volumen an Peracetylierungsgemisch richtete sich nach der OH-Zahl des zu peracetylierenden Polyethercarbonats, wobei (jeweils bezogen auf 10 g Polyethercarbonatpolyol) die OH-Zahl des Polyethercarbonatpolyols aufgerundet wird auf die nächste 10er-Stelle; Pro 10 mg KOH/g werden dann 10 ml an Peracetylierungsgemisch zugesetzt. Beispielsweise wurden der Probe von 10 g eines Polyethercarbonatpolyols mit einer OH-Zahl = 45,1 mg KOH/g entsprechend 50 ml Peracetylierungsgemisch zugesetzt.

Nach der Zugabe von Siedeperlen aus Glas wurde der Schlifferlenmeyerkolben mit einem Steigrohr (Luftkühler) versehen und die Probe 75 min bei schwachem Rückfluss gekocht. Das Probengemisch wurde dann in einen 500 ml-Rundkolben überführt, und über einen Zeitraum von 30 min bei 80°C und 10 mbar (absolut) wurden flüchtige Bestandteile (im wesentlichen Pyridin, Essigsäure und überschüssiges Essigsäureanhydrid) abdestilliert. Der Destillationsrückstand wurde anschließend dreimal mit je 100 ml Cyclohexan (alternativ wurde Toluol eingesetzt in den Fällen, in denen sich der Destillationsrückstand in Cyclohexan nicht löste) versetzt und flüchtige Bestandteile jeweils bei 15 min bei 80 °C und 400 mbar (absolut) entfernt. Anschließend wurden flüchtige Bestandteile der Probe eine Stunde bei 100 °C und 10 mbar (absolut) entfernt.
Zur Bestimmung der molaren Anteile an primären und sekundären OH-Endgruppen im Polyethercarbonatpolyol wurde die so vorbereitete Probe in deuteriertem Chloroform gelöst und mittels $^1$H-NMR (Firma Bruker, DPX 400, 400 MHz, Pulsprogramm zg30, Wartezeit d1: 10s, 64 Scans) untersucht. Die relevanten Resonanzen im $^1$H-NMR (bezogen auf TMS = 0 ppm) sind wie folgt:

Methylsignal einer peracetylierten sekundären OH-Endgruppe: 2,04 ppm
Methylsignal einer peracetylierten primären OH-Endgruppe: 2,07 ppm
Der molare Anteil der sekundären und primären OH-Endgruppen ergibt sich dann wie folgt:

$$\text{Anteil sekundärer OH-Endgruppen (CH-OH)} = F(2{,}04) / (F(2{,}04) + F(2{,}07)) * 100\ \% \qquad \text{(XV)}$$

$$\text{Anteil primärer OH-Endgruppen (CH2-OH)} = F(2{,}07) / (F(2{,}04) + F(2{,}07)) * 100\ \% \qquad \text{(XVI)}$$

In den Formeln (XV) und (XV) steht F für Fläche der Resonanz bei 2,04 ppm bzw. 2,07 ppm.

I. Herstellung eines Polyethercarbonatpolyols A1-1 durch Copolymerisation von PO und $CO_2$

In einen 1 Liter Druckreaktor mit Gasdosierungseinrichtung wurden 140 mg DMC-Katalysator (hergestellt gemäß Beispiel 6 von WO-A 01/80994) sowie 160 g eines wasserfreien trifunktionellen Poly(oxypropylen)polyols mit OH-Zahl = 235 mg KOH/g als H-funktionelle Startersubstanzen vorgelegt. Der Reaktor wurde auf 130 °C aufgeheizt und

durch wiederholtes Beaufschlagen von Stickstoff auf ca. 5 bar und nachfolgendes Entspannen auf ca. 1 bar inertisiert. Dieser Vorgang wurde 3-mal durchgeführt. In den Reaktor wurden bei 130 °C und Abwesenheit von $CO_2$ 25 g Propylenoxid (PO) schnell eindosiert. Das Anspringen der Reaktion machte sich durch eine Temperaturspitze ("Hotspot") und durch Druckabfall auf etwa den Ausgangsdruck (ca. 1 bar) bemerkbar. Nach dem ersten Druckabfall wurden 20 g PO und dann 19 g PO schnell eindosiert, wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert, wodurch es nach einer weiteren Wartezeit zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (387 g) kontinuierlich mit ca. 1,8 g/min in den Reaktor gepumpt, während nach 10 Minuten in Schritten von 5°C pro fünf Minuten die Temperatur auf 105 °C gesenkt wurde. Nach beendeter PO-Zugabe wurde noch 60 Minuten bei 105 °C und dem oben angegebenen Druck weitergerührt (1500 U/min). Durch Dünnschichtverdampfung wurden abschließend leichtflüchtige Bestandteile aus dem Produkt abgetrennt.
Analyse des resultierenden Polyethercarbonatpolyols A1-1:

Hydroxylzahl: 54,9 mg KOH/g
Dynamische Viskosität: 4115 mPas (25 °C)
Gehalt an eingebautem $CO_2$: 12,8 Gew.-%.

11. Herstellung der Polyethercarbonatpolyole mit endständigem Alkylenoxid-Block

Herstellung des Polyethercarbonatpolyols A1-2 (PO/EO = 100/0 [mol/mol]) (Vergleich)

In einem 2 1 Laborautoklaven wurden unter Stickstoffatmosphäre 403 g des Polyethercarbonatpolyols A1-1 vorgelegt, auf 130°C aufgeheizt und dann bei dieser Temperatur 30 Minuten bei einen Druck von 0,1 bar (absolut) mit Stickstoff gestrippt. Anschließend wurde bei 130°C unter Rühren innerhalb von 5 Minuten 68,8 g (1,184 mol) PO in den Reaktor dosiert. Nach einer Nachreaktionszeit von 90 Minuten wurden leicht flüchtige Bestandteile bei 90°C für 30 Minuten im Vakuum ausgeheizt und der Reaktionsansatz dann auf Raumtemperatur abgekühlt.
Analyse des resultierenden Polyethercarbonatpolyols A1-2:

Hydroxylzahl: 47,3 mg KOH/g
Dynamische Viskosität: 3130 mPas (25 °C)
Gehalt an primären OH-Gruppen: 8 mol-%.

Herstellung des Polyethercarbonatpolyols A1-3 (PO/EO = 70/30 [mol/mol])

In einem 2 1 Laborautoklaven wurden unter Stickstoffatmosphäre 385 g des Polyethercarbonatpolyols A1-1 vorgelegt, auf 130°C aufgeheizt und dann bei dieser Temperatur 30 Minuten bei einen Druck von 0,1 bar (absolut) mit Stickstoff gestrippt. Anschließend wurde bei 130°C unter Rühren innerhalb von 5 Minuten eine Mischung von 46,1 g (0,793 mol) PO und 15,0 g (0,340 mol) EO in den Reaktor dosiert. Nach einer Nachreaktionszeit von 90 Minuten wurden leicht flüchtige Bestandteile bei 90°C für 30 Minuten im Vakuum ausgeheizt und der Reaktionsansatz dann auf Raumtemperatur abgekühlt.
Analyse des resultierenden Polyethercarbonatpolyols A1-3:

Hydroxylzahl: 45,1 mg KOH/g
Dynamische Viskosität: 3735 mPas (25 °C)
Gehalt an primären OH-Gruppen: 21 mol-%.

Herstellung des Polyethercarbonatpolyols A1-4 (PO/EO = 50/50 [mol/mol])

In einem 2 1 Laborautoklaven wurden unter Stickstoffatmosphäre 310 g des Polyethercarbonatpolyols A1-1 vorgelegt, auf 130°C aufgeheizt und dann bei dieser Temperatur 30 Minuten bei einen Druck von 0,1 bar (absolut) mit Stickstoff gestrippt. Anschließend wurde bei 130°C unter Rühren innerhalb von 5 Minuten eine Mischung von 26,4 g (0,454 mol) PO und 20,1 g (0,456 mol) EO in den Reaktor dosiert. Nach einer Nachreaktionszeit von 90 Minuten wurden leicht flüchtige Bestandteile bei 90°C für 30 Minuten im Vakuum ausgeheizt und der Reaktionsansatz dann auf Raumtemperatur abgekühlt.
Analyse des resultierenden Polyethercarbonatpolyols A1-4:

Hydroxylzahl: 44,7 mg KOH/g

Dynamische Viskosität: 4380 mPas (25 °C)
Gehalt an primären OH-Gruppen: 29 mol-%.

Herstellung des Polyethercarbonatpolyols A1-5 (PO/EO = 30/70 [mol/mol])

In einem 2 1 Laborautoklaven wurden unter Stickstoffatmosphäre 401 g des Polyethercarbonatpolyols A1-1 vorgelegt, auf 130°C aufgeheizt und dann bei dieser Temperatur 30 Minuten bei einen Druck von 0,1 bar (absolut) mit Stickstoff gestrippt. Anschließend wurde bei 130°C unter Rühren innerhalb von 5 Minuten eine Mischung von 22,5 g (0,387 mol) PO und 39,8 g (0,902 mol) EO in den Reaktor dosiert. Nach einer Nachreaktionszeit von 90 Minuten wurden leicht flüchtige Bestandteile bei 90°C für 30 Minuten im Vakuum ausgeheizt und der Reaktionsansatz dann auf Raumtemperatur abgekühlt.
Analyse des resultierenden Polyethercarbonatpolyols A1-45
Hydroxylzahl: 47,5 mg KOH/g
Dynamische Viskosität: bei 25 °C nicht bestimmbar, da A1-5 ein Feststoff ist.
Gehalt an primären OH-Gruppen: 37 mol-%.

III. Herstellung von Polyurethan-Weichblockschaumstoffen

In für die Herstellung von Polyurethanschaumstoffen üblicher Verarbeitungsweise nach dem Einstufenverfahren wurden die in den Beispielen der in der nachfolgenden Tabelle 1 aufgeführten Einsatzstoffe miteinander zur Reaktion gebracht.
Die erfindungsgemäßen Polyurethan-Weichblockschaumstoffe (Beispiele 3 bis 6), in denen Polyethercarbonatpolyole mit endständigem Mischblock aus Propylenoxid (PO) und Ethylenoxid (EO) verarbeitet wurden, wiesen überraschenderweise eine höhere Stauchhärte und eine höhere Zugfestigkeit auf im Vergleich zu Weichblockschaumstoffen, welche auf einem Polyetherpolyol (A2-1, siehe Tabelle 1, Vergleichsbeispiel 1) oder einem Polyethercarbonatpolyol mit einem endständigen Propylenoxid-Block (A1-2, siehe Tabelle 1, Vergleichsbeispiel 2) basieren.

Tabelle 1: Herstellung und Eigenschaften der Polyurethan-Weichblockschaumstoffe

| | | **1 (Vgl.)** | **2 (Vgl.)** | **3** | **4** | **5** | **6** |
|---|---|---|---|---|---|---|---|
| A-Komponente: | | | | | | | |
| A2-1 | [Gew.-Tle.] | 94,95 | | | | | |
| A1-2 | [Gew.-Tle.] | | 94,95 | | | | |
| A1-3 | [Gew.-Tle.] | | | 94,95 | | | |
| A1-4 | [Gew.-Tle.] | | | | 94,98 | | |
| A1-5 | [Gew.-Tle.] | | | | | 94,97 | 94,97 |
| Wasser | [Gew.-Tle.] | 3,80 | 3,80 | 3,80 | 3,80 | 3,80 | 3,80 |
| A4-1 | [Gew.-Tle.] | 0,95 | 0,95 | 0,95 | 0,95 | 0,95 | 0,95 |
| A4-2 | [Gew.-Tle.] | 0,11 | 0,11 | 0,11 | 0,11 | 0,11 | 0,11 |
| A4-3 | [Gew.-Tle.] | 0,19 | 0,19 | 0,19 | 0,15 | 0,17 | 0,17 |
| B-Komponente: | | | | | | | |
| TDI-1 | [Gew.-Tle] | 100 | 100 | 90 | 100 | 100 | 80 |
| TDI-2 | [Gew.-Tle] | | | 10 | | | 20 |
| MV (A:B) | 100 : | 47,27 | 47,27 | 47,27 | 47,27 | 47,27 | 47,27 |
| Kennzahl | | 108 | 108 | 108 | 108 | 108 | 108 |
| Rohdichte | [kg/m3] | 27,5 | 28,9 | 31,5 | 30,5 | 27,9 | 27,9 |
| Stauchhärte | [kPa] | 4,8 | 5,7 | 6,4 | 6,8 | 7,6 | 7,3 |
| Zugfestigkeit | [kPa] | 85 | 79 | 104 | 99 | 107 | 113 |

(fortgesetzt)

| | | 1 (Vgl.) | 2 (Vgl.) | 3 | 4 | 5 | 6 |
|---|---|---|---|---|---|---|---|
| Bruchdehnung | [%] | 123 | 103 | 114 | 97 | 96 | 110 |
| Abkürzungen: Vgl. = Vergleichsbeispiel; Gew.-Tle. = Gewichtsteile; MV (A:B) = Gewichtsverhältnis der Komponente A zu Komponente B bei der angegebenen Kennzahl und bezogen auf 100 Gewichtsteile Komponente A. | | | | | | | |

**Patentansprüche**

**1.** Verfahren zur Herstellung von Polyethercarbonatpolyolen, **dadurch gekennzeichnet, dass**

(i) in einem ersten Schritt aus einer oder mehreren H-funktionellen Startsubstanzen, aus einem oder mehreren Alkylenoxiden und Kohlendioxid in Gegenwart mindestens eines DMC-Katalysators ein Polyethercarbonatpolyol hergestellt wird, und
(ii) in einem zweiten Schritt das Polyethercarbonatpolyol mit einer Mischung aus mindestens zwei verschiedenen Alkylenoxiden in Gegenwart mindestens eines DMC-Katalysators kettenverlängert wird.

**2.** Verfahren gemäß Anspruch 1, **dadurch gekennzeichnet, dass** im ersten Schritt (i)

($\alpha$) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt werden,
($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,
($\gamma$) ein oder mehrere Alkylenoxide und Kohlendioxid zu der aus Schritt ($\beta$) resultierenden Mischung zugesetzt werden, wobei die in Schritt ($\gamma$) eingesetzten Alkylenoxide gleich oder verschieden sein können von den bei Schritt ($\beta$) eingesetzten Alkylenoxiden.

**2.** Verfahren gemäß Anspruch 1 oder 2, **dadurch gekennzeichnet, dass** im zweiten Schritt (ii) als Mischung aus mindestens zwei verschiedenen Alkylenoxiden eine Mischung aus Ethylenoxid (EO) und Propylenoxid (PO) eingesetzt wird.

**3.** Verfahren gemäß Anspruch 1 oder 2, **dadurch gekennzeichnet, dass** im zweiten Schritt (ii) als Mischung aus mindestens zwei verschiedenen Alkylenoxiden eine Mischung aus Ethylenoxid (EO) und Propylenoxid (PO) eingesetzt wird in einem molaren Verhältnis EO/PO von 95/5 bis 10/90.

**4.** Verfahren gemäß Anspruch 1 oder 2, **dadurch gekennzeichnet, dass** im zweiten Schritt (ii) als Mischung aus mindestens zwei verschiedenen Alkylenoxiden eine Mischung aus Ethylenoxid (EO) und Propylenoxid (PO) eingesetzt wird in einem molaren Verhältnis EO/PO von 85/15 bis 60/40.

**5.** Verfahren gemäß einem der Ansprüche 1 bis 4, **dadurch gekennzeichnet, dass** (iii) das aus Schritt (ii) resultierende Polyethercarbonatpolyol mit terminalen Mischblock kettenverlängert wird mit einem Alkylenoxid.

**6.** Polyethercarbonatpolyol, das einen endständigen Mischblock aus mindestens zwei Alkylenoxiden enthält.

**7.** Polyethercarbonatpolyol gemäß Anspruch 6, das einen endständigen Mischblock aus Ethylenoxid (EO) und Propylenoxid (PO) enthält.

**8.** Polyethercarbonatpolyol gemäß Anspruch 7, das einen endständigen Mischblock aus Ethylenoxid (EO) und Propylenoxid (PO) im molaren Verhältnis von EO/PO von 95/5 bis 10/90 enthält.

**9.** Polyethercarbonatpolyol gemäß Anspruch 7, das einen endständigen Mischblock aus Ethylenoxid (EO) und Propylenoxid (PO) im molaren Verhältnis von EO/PO von 85/15 bis 60/40 enthält.

**10.** Polyethercarbonatpolyol gemäß einem der Ansprüche 6 bis 9, **dadurch gekennzeichnet, dass** die mittlere Länge des endständigen Mischblocks aus mindestens zwei verschiedenen Alkylenoxiden von 2,0 bis 20,0 Alkylenoxid-Einheiten beträgt.

**11.** Verfahren zur Herstellung von Polyurethanweichschaumstoffen, wobei eine Polyolkomponente (Komponente A) eingesetzt wird, die ein Polyethercarbonatpolyol gemäß einem der Ansprüche 6 bis 10 enthält.

**12.** Verfahren zur Herstellung von Polyurethanweichschaumstoffen mit einer Rohdichte gemäß DIN EN ISO 3386-1-98 im Bereich von ≥ 10 kg/$m^3$ bis ≤ 150 kg/$m^3$ und einer Stauchhärte gemäß DIN EN ISO 3386-1-98 im Bereich von ≥ 0,5 kPa bis ≤ 20 kPa (bei 40% Verformung und 4. Zyklus) durch Umsetzung von
Komponente A enthaltend

A1 100 bis 10 Gew.-Teile (bezogen auf die Summe der Gew.-Teile der Komponenten A1 und A2) Polyethercarbonatpolyol gemäß einem der Ansprüche 6 bis 10,
A2 0 bis 90 Gew.-Teile (bezogen auf die Summe der Gew.-Teile der Komponenten A1 und A2) konventionelles Polyetherpolyol,
A3 0,5 bis 25 Gew.-Teile (bezogen auf die Summe der Gew.-Teile der Komponenten A1 und A2) Wasser und/oder physikalische Treibmittel,
A4 0,05 bis 10 Gew.-Teile (bezogen auf die Summe der Gew.-Teile der Komponenten A1 und A2) Hilfs- und Zusatzstoffe wie

d) Katalysatoren,
e) oberflächenaktive Zusatzstoffe,
f) Pigmente oder Flammschutzmittel,

A5 0 bis 10 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399,
mit Komponente B enthaltend Polyisocyanate,
wobei die Herstellung bei einer Kennzahl von 50 bis 250 erfolgt, und wobei alle Gewichtsteilangaben der Komponenten A1 bis A5 in der vorliegenden Anmeldung so normiert sind, dass die Summe der Gewichtsteile der Komponenten A1+A2 in der Zusammensetzung 100 ergibt.

**13.** Verfahren gemäß Anspruch 12, wobei eine Komponente A aus

A1 100 Gew.-Teile Polyethercarbonatpolyol gemäß einem der Ansprüche 6 bis 10,
A2 die Komponente A frei von konventionellem Polyetherpolyol ist,
A3 0,5 bis 25 Gew.-Teile (bezogen auf die Gew.-Teile der Komponente A1) Wasser und/oder physikalische Treibmittel,
A4 0,05 bis 10 Gew.-Teile (bezogen auf die Gew.-Teile der Komponente A1) Hilfs- und Zusatzstoffe wie

g) Katalysatoren,
h) oberflächenaktive Zusatzstoffe,
i) Pigmente oder Flammschutzmittel, und

A5 0 bis 10 Gew.-Teile (bezogen auf die Gew.-Teile der Komponente A1) gegenüber Isocyanaten reaktionsfähigen Wasserstoffatomen aufweisenden Verbindungen mit einem Molekulargewicht von 62 - 399
eingesetzt wird.

**14.** Verfahren zur Herstellung von Polyurethanweichschaumstoffen, wobei eine Polyolkomponente (Komponente A) eingesetzt wird, die ein Polyethercarbonatpolyol erhältlich gemäß einem der Ansprüche 1 bis 5 enthält.

**15.** Polyurethanweichschaumstoffe mit einer Rohdichte gemäß DIN EN ISO 3386-1-98 im Bereich von ≥ 10 $kg/m^3$ bis ≤ 150 $kg/m^3$ und einer Stauchhärte gemäß DIN EN ISO 3386-1-98 im Bereich von ≥ 0,5 kPa bis ≤ 20 kPa (bei 40% Verformung und 4. Zyklus) erhältlich nach einem Verfahren gemäß einem der Ansprüche 11 bis 14.

Europäisches Patentamt
European Patent Office
Office européen des brevets

# EUROPÄISCHER RECHERCHENBERICHT

Nummer der Anmeldung
EP 11 16 8433

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2008/058913 A1 (BASF SE [DE]; MIJOLOVIC DARIJO [DE]; BAUER STEPHAN [DE]; GOETTKE STEPH) 22. Mai 2008 (2008-05-22)<br>* Seite 6, Zeile 13 - Seite 10, Zeile 8 *<br>* Seite 11, Zeilen 16-41 *<br>* Seite 14, Zeilen 9-23 *<br>* Beispiele *<br>----- | 1-15 | INV.<br>C08G64/34<br>C08G18/44<br>C08G65/26<br>C08G64/18 |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| Den Haag | 6. Oktober 2011 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 11 16 8433

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2011

| Im Recherchenbericht angeführtes Patentdokument | Datum der Veröffentlichung | Mitglied(er) der Patentfamilie | Datum der Veröffentlichung |
|---|---|---|---|
| WO 2008058913 A1 | 22-05-2008 | AT 514726 T | 15-07-2011 |
| | | CN 101535364 A | 16-09-2009 |
| | | DK 2091990 T3 | 26-09-2011 |
| | | EP 2091990 A1 | 26-08-2009 |
| | | JP 2010509479 A | 25-03-2010 |
| | | KR 20090088377 A | 19-08-2009 |
| | | US 2009306239 A1 | 10-12-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4500704 A
- WO 2008058913 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP A A
- JP 4145123 B
- WO 0139883 A
- WO 0180994 A
- EP 0000389 A
- EP 0176013 A
- EP 0007502 A
- EP 355000 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Kunststoff-Handbuch. Carl-Hanser-Verlag, 1993, vol. VII, 104-127
- **W. SIEFKEN.** Justus Liebigs Annalen der Chemie. vol. 562, 75-136
- Kunststoff-Handbuch. Carl-Hanser-Verlag, 1993, vol. VII, 139-265